# DEMANDE DE BREVET EUROPEEN

(11) **EP 3 096 374 A1**
(43) Date de publication de la demande: **23.11.2016**
(21) Numéro de dépôt: 16166116.0
(22) Date de dépôt: 20.04.2016
(51) Int. Cl.: H01M 2/10, B60R 16/04, H01M 10/06

(54) **DISPOSITIF DE RÉTENTION DE LIQUIDE D'UNE BATTERIE DE VÉHICULE AUTOMOBILE**

(30) Priorité: 22.05.2015 FR 1554622
(71) Demandeur: Peugeot Citroen Automobiles S.A., 78140 Vélizy Villacoublay (FR)
(72) Inventeur: ROBERT, Pascal, 25550 BAVANS (FR); BOUVROT, Frédéric, 25150 BOURGUIGNON (FR); CONVERS, Germain, 25200 BETHONCOURT (FR); MILLET, Thierry, 90500 BEAUCOURT (FR)

(57) **Abrégé**

L'invention consiste en un dispositif de rétention (8) du liquide d'une batterie (4) de véhicule automobile (2), comprenant :un bac de rétention (12) avec une paroi de fond (14) et des parois latérales aptes à contenir le liquide, ladite paroi de fond comprenant un passage (24) dudit liquide, ledit passage formant un premier entonnoir (18) sous la paroi de fond (14) ; le dispositif comprend, en outre : un deuxième entonnoir (26) configuré pour pouvoir être disposé sous la sortie (25) du premier entonnoir (18) en vue de recevoir le liquide et le guider vers une position latéralement décalée par rapport à la sortie (25) du premier entonnoir. L'invention consiste également en un véhicule (2) comprenant un tel dispositif de rétention (8).

## Description

L'invention a trait au domaine des véhicules automobiles. Plus particulièrement, l'invention a trait au domaine de l'implantation d'une batterie dans un véhicule automobile, plus particulièrement à la rétention de liquide en cas de fuite de ladite batterie.

Une batterie électrique de véhicule automobile comprend un liquide généralement acide. Une fuite de la batterie électrique de liquide acide peut subvenir en cas de choc ou bien en cas de fissuration de la batterie. La batterie électrique est généralement installée dans le compartiment moteur du véhicule ou bien, sur ou sous le plancher du véhicule. Elle est généralement fixée sur un support structurel du véhicule et l'écoulement de liquide acide en cas de fuite de la batterie peut s'étendre sur le support ainsi que sur d'autres organes du véhicule situés sous la batterie. Les organes de structure en tôle ou les équipements mécaniques tels qu'un organe de direction peuvent être endommagés par corrosion suite à l'écoulement de liquide acide. L'écoulement de liquide acide peut aussi endommager des faisceaux électriques s'étendant sous le support de la batterie.

Le document de brevet US 4,098,366 divulgue un dispositif de rétention de liquide pour batterie électrique de véhicule automobile. Le dispositif de rétention comprend un bac de rétention avec une paroi de fond et des parois latérales aptes à contenir le liquide ; il comprend, en outre, un couvercle pour fermer le bac. Le bac est posé sur un support du véhicule et fixé au support par des moyens de fixation rapide ; le bac comprend, en outre, un entonnoir de rétention de liquide avec une entrée fixée au fond du bac, l'entonnoir se terminant par un orifice de sortie pour acheminer le liquide de fuite de la batterie hors du bac. Le support comprend, en outre, un orifice d'évacuation situé à la verticale sous l'entonnoir et apte à coopérer avec l'orifice de sortie de l'entonnoir lors du montage du bac sur le support, de sorte à acheminer le liquide de la sortie de l'entonnoir au-dessous du support de batterie. L'entonnoir et l'orifice de sortie sont par ailleurs en matériaux souples pour faciliter l'auto centrage de l'orifice de sortie avec l'orifice d'évacuation du support. Cet enseignement est intéressant en ce que le dispositif de rétention permet d'éviter la projection de liquides acides sur les équipements environnants ainsi que sur le support de la batterie. Il est cependant silencieux quant à la rétention de liquide pour éviter leur écoulement sur les organes du véhicule situés sous le support de la batterie électrique.

L'invention a pour objectif de proposer une solution palliant les inconvénients de l'état de l'art en particulier de l'état de l'art susmentionné. Plus particulièrement, l'invention a pour objectif de proposer une solution de rétention des fuites de liquide acide de batterie électrique, qui soit efficace pour protéger les organes structurels et/ou les équipements sensibles situés sous la batterie.

L'invention a pour objet un dispositif de rétention du liquide d'une batterie de véhicule automobile, comprenant : un bac de rétention avec une paroi de fond et des parois latérales aptes à contenir le liquide, ladite paroi de fond comprenant un passage dudit liquide, ledit passage formant un premier entonnoir sous la paroi de fond ; remarquable en ce qu'il comprend, en outre : un deuxième entonnoir configuré pour pouvoir être disposé sous la sortie du premier entonnoir en vue de recevoir le liquide et le guider vers une position latéralement décalée par rapport à la sortie du premier entonnoir.

Selon un mode avantageux de l'invention, le deuxième entonnoir comprend une goulotte destinée à s'étendre transversalement au véhicule.

Selon un mode avantageux de l'invention, le deuxième entonnoir fait partie d'un support d'un ou plusieurs éléments du véhicule.

Selon un mode avantageux de l'invention, le deuxième entonnoir comprend un embout de sortie généralement cylindrique sur lequel un tuyau flexible peut être monté.

Selon un mode avantageux de l'invention, le bac de rétention est généralement rectangulaire et s'étend suivant une direction principale, le passage pour le liquide au niveau de la paroi de fond formant une section s'étendant transversalement, préférentiellement perpendiculairement, à la direction principale.

Selon un mode avantageux de l'invention, le passage pour le liquide au niveau de la paroi de fond est de section rectangulaire ou ovale.

Selon un mode avantageux de l'invention, le passage pour le liquide au fond du bac est situé dans une position centrale dudit fond.

Selon un mode avantageux de l'invention, les parois latérales du bac sont d'une hauteur inférieure à 2cm, le passage de la paroi de fond s'étendant perpendiculairement, sur plus de 20% de la distance moyenne, préférentiellement sur plus de 40%, plus préférentiellement encore sur plus de 60%, entre les parois latérales dans la direction correspondante.

Avantageusement, le passage de la paroi de fond s'étend dans la direction transversale du véhicule pour assurer l'écoulement du liquide du bac lorsque le véhicule est en position inclinée avec les roues sur un trottoir.

Selon un mode avantageux de l'invention, le dispositif de rétention est en plastique résistant aux acides ou du moins comprenant une couche de protection résistante, préférentiellement une couche protectrice de téflon® (PTFE).

L'invention a également pour objet un véhicule automobile comprenant : une batterie comprenant du liquide, préférentiellement de l'acide ; un dispositif de rétention du liquide de la batterie ; un support de la batterie, fixé à la structure du véhicule ; remarquable en ce que le dispositif de rétention est conforme à l'invention, le bac de rétention dudit dispositif étant disposé sur le support et recevant la batterie. Le support de la batterie comprend une ouverture recevant le premier entonnoir.

Selon un mode avantageux de l'invention, le bac de rétention rectangulaire est orienté dans la direction longitudinale du véhicule, le premier entonnoir s'étendant sous le bac dans une direction moyenne inclinée de la verticale vers l'arrière du véhicule.

Selon un mode avantageux de l'invention, le deuxième entonnoir du dispositif de rétention est disposé de manière à guider le liquide latéralement vers l'extérieur du véhicule.

Selon un mode avantageux de l'invention, le véhicule comprend deux profilés structurels généralement parallèles s'étendant longitudinalement dans le compartiment moteur à l'avant du véhicule, le support et le deuxième entonnoir du dispositif de rétention étant fixés à un des deux profilés structurels.

Selon un mode avantageux de l'invention, le deuxième entonnoir du dispositif de rétention est configuré pour guider le liquide le long d'une face latérale intérieure du profilé structurel sur lequel le deuxième entonnoir et le support sont fixés.

Selon un mode avantageux de l'invention, le véhicule comprend un tuyau flexible raccordé à la sortie du deuxième entonnoir du dispositif de rétention.

Les mesures de l'invention sont intéressantes en ce que le dispositif de rétention de liquide acide en cas de fuite de la batterie électrique évite de manière efficace l'endommagement des organes de véhicule situés sous le support de la batterie. En effet, le dispositif de rétention comprend une cascade de deux entonnoirs qui sont situés sous le support de la batterie et qui sont configurés pour guider l'acheminement du liquide acide en dehors de la zone en question.

D'autres caractéristiques et avantages de la présente invention seront mieux compris à l'aide de la description et des dessins parmi lesquels :
- La figure 1 est une vue de dessus d'un véhicule automobile comprenant un dispositif de rétention conforme à l'invention ;
- La figure 2 est une vue en perspective du dispositif de rétention du véhicule de la figure 1 ;
- La figure 3 est une vue en perspective du bac du dispositif de rétention de la figure 2 ;
- La figure 4 est une vue en perspective du deuxième entonnoir du dispositif de rétention de la figure 2 ;

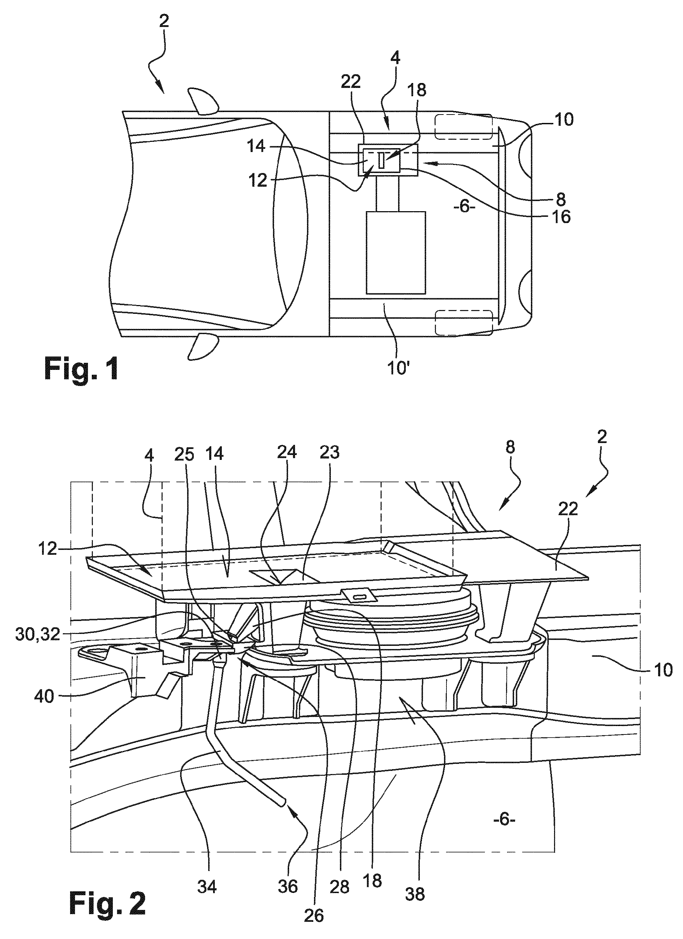

La figure 1 est une vue de dessus d'un véhicule automobile 2 conforme à l'invention comprenant une batterie électrique 4 avec du liquide acide située dans le compartiment moteur 6 à l'avant du véhicule. Le véhicule automobile 2 comprend un dispositif de rétention 8 de liquide acide conforme à l'invention en cas de fuite de la batterie. Le dispositif de rétention 8 est monté à l'un des deux profilés structurels 10 et 10' qui s'étendent longitudinalement dans le compartiment moteur 6 du véhicule, en l'occurrence il est monté sur le profilé gauche 10 du véhicule. Le dispositif 8 comprend un bac de rétention 12 recevant la batterie, le bac ayant une paroi de fond 14 et des parois latérales 16 pour contenir le liquide. Le bac 12 comprend un premier entonnoir 18 dont l'entrée est située au niveau de la paroi de fond 14 et qui s'étend sous le bac (non visible). Le dispositif comprend, en outre, un deuxième entonnoir (non visible) disposé en cascade sous la sortie du premier entonnoir pour recevoir le liquide et le guider vers une position latéralement décalée par rapport à la sortie du premier entonnoir. Le second entonnoir est visible à la figure 2, figure sur laquelle le cheminement du liquide est par ailleurs décrit en détail. Le bac de rétention 12 est monté à la structure via un support 22. On peut voir que le support 22 ainsi que le bac 12 sont de forme moyenne rectangulaire, ce qui est favorable pour le placement d'une batterie de véhicule qui est généralement de forme correspondante. Le bac 12 et le support 22 sont par ailleurs orientés dans une direction principale qui est la direction longitudinale du véhicule.

La figure 2 est une vue en perspective du dispositif de rétention 8 conforme à l'invention du véhicule automobile 2. On peut voir en arrière-plan le profilé longitudinal 10 s'étendant de l'arrière vers l'avant du véhicule (de gauche à droite sur l'image). On peut voir de haut en bas sur l'image la batterie 4 dont les arêtes verticales et horizontales sont représentées en traits interrompus et qui est disposée sur le bac de rétention 12. Le fond du bac 14 comprend une section ouverte 23 au niveau du plan de réception de la batterie. Cette section ouverte correspond à l'entrée d'un passage 24 dans le fond du bac formant le premier entonnoir 18, cette section ouverte 23 permettant d'évacuer le liquide du bac 12 afin que le liquide puisse s'écouler dans le passage 24 du premier entonnoir 18 ; on peut également voir sur l'image le support 22 sur lequel est disposé le bac 12 et qui est fixé sur le profilé longitudinal gauche 10 du compartiment moteur 6. Le support comprend en l'occurrence des pieds fixés via des équerres au profilé longitudinal. Le support 22 de la batterie comprend une ouverture (non visible) pour le passage du premier entonnoir 18, la taille de cette ouverture étant réalisée selon la taille de la section ouverte 23 dans le fond de bac 14. On peut observer que le premier entonnoir 18 s'étend sous le bac 12 dans une direction moyenne inclinée de la verticale vers l'arrière du véhicule (à gauche sur l'image) et qu'il traverse une autre ouverture (visible) réalisée dans la paroi du pied arrière de fixation du support avant de se terminer par son orifice de sortie 25. Cette mesure est intéressante pour dévier une première fois l'écoulement du liquide acide vers l'arrière du support 22. Le deuxième entonnoir 26 est disposé en cascade avec le premier entonnoir 18, il comprend une goulotte 28 s'étendant perpendiculairement au profilé longitudinal pour guider le liquide latéralement vers l'extérieur du véhicule 2. Cette mesure est intéressante pour dévier le liquide acide dans une deuxième direction. L'orifice de sortie 25 du premier entonnoir 18 au-dessus du deuxième entonnoir 26 est en l'occurrence disposé centralement par rapport à l'étendue de la goulotte 28 ; cette mesure est intéressante en cas de fuite lorsque le véhicule est en position inclinée par exemple avec les roues sur un côté à cheval sur un trottoir. En effet, lorsque le véhicule est incliné latéralement, l'écoulement du liquide prend une inclinaison et son écoulement dans la goulotte 28 est alors favorisé. Le positionnement de l'orifice de sortie 25 du premier entonnoir 18 par rapport à la goulotte 28 ne limite cependant pas l'invention, il peut être situé au-dessus du deuxième entonnoir 26 jusqu'à l'une ou l'autre des extrémités de la goulotte 28. La goulotte 28 comprend un embout de sortie 32 de forme cylindrique au bout duquel se trouve un orifice 30 d'écoulement. Sur l'embout de sortie 32 est fixé un tuyau flexible 34 permettant de déporter l'écoulement du liquide à distance sous le deuxième entonnoir. L'orifice de sortie 36 du tuyau 34 est en l'occurrence en face d'une paroi pare-boue en arrière d'une roue du véhicule, paroi sur laquelle peut s'écouler directement le liquide acide en cas de fuite de la batterie. Cette mesure est intéressante pour acheminer le liquide de manière particulière, cette mesure ne limite cependant en rien l'invention, l'embout de sortie 32 du deuxième entonnoir 26 peut être libre de tuyau d'évacuation en vue d'un écoulement du liquide le long de la face latérale intérieure 38 du profilé. L'embout de sortie 32 de la goulotte 28 est situé à une extrémité de celle-ci. Cette mesure ne limite en rien non plus l'invention, l'embout de la goulotte peut également être situé centralement dans la goulotte ou jusqu'à l'autre extrémité de la goulotte. On peut observer sur l'image que le deuxième entonnoir 26 est intégré à un support d'équipement 40 du véhicule qui est fixé au profilé longitudinal 10 du véhicule. Le support en question peut être celui d'un ou plusieurs éléments du véhicule. Cette mesure est intéressante pour réduire l'espace nécessaire à la réalisation du dispositif de rétention 8 dans le compartiment moteur 6 du véhicule.

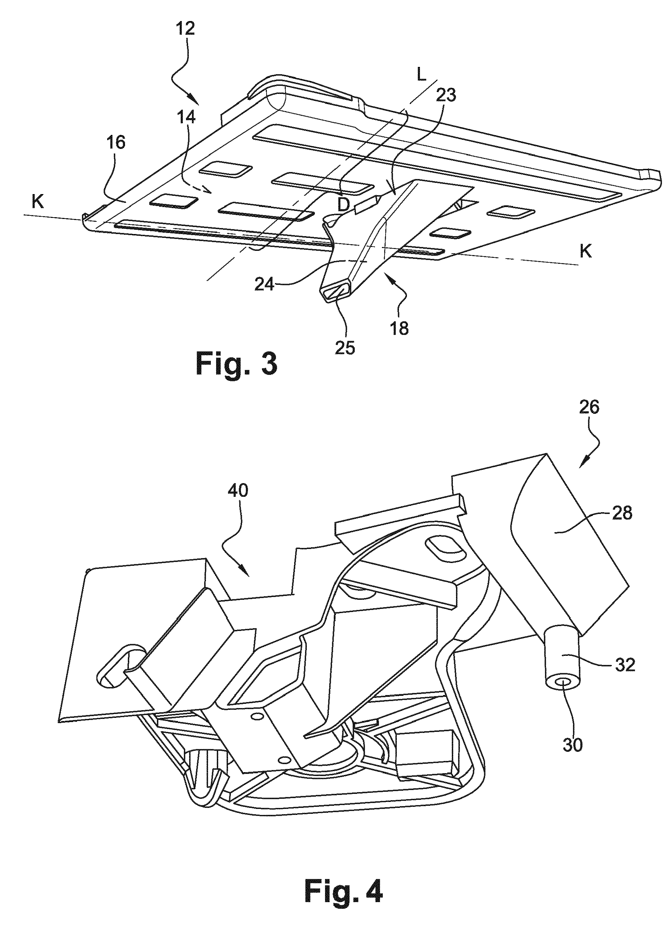

La figure 3 est une vue en perspective du bac 12 du dispositif de rétention conforme à l'invention. On peut voir par le dessous, le fond du bac 14, les parois latérales 16 du bac, et enfin le premier entonnoir 18. L'entonnoir est de section se réduisant depuis son entrée formée par la section ouverte 23 du fond de bac 14 jusqu'à son orifice de sortie 25. La section ouverte 23 du fond de bac 14 est par ailleurs située dans une position centrale du fond. On peut observer que le bac de rétention 12 s'étend suivant une direction principale « K », le passage 24 pour le liquide formant le premier entonnoir est d'une section s'étendant dans la direction « L » perpendiculaire à la direction « K » principale. La forme de la section du passage 24 est rectangulaire, celle-ci ne limitant cependant pas l'invention. Dans un mode alternatif de réalisation, la forme de la section du passage 24 pour le liquide peut-être de section ovale ou bien circulaire. La forme de cette section peut également se modifier entre la section ouverte 23 à l'entrée de l'entonnoir jusqu'à l'orifice de sortie 25. On peut voir sur l'image que les parois latérales 16 du bac sont faiblement élevées, elles peuvent être d'une hauteur inférieure à 2cm. Cette mesure est favorable au poids du véhicule. Par ailleurs, la section ouverte 23 de la paroi de fond 14 s'étend dans la direction « L » sur plus de 20%, préférentiellement sur plus de 40%, plus préférentiellement encore sur plus de 60% de la distance moyenne « D » entre les parois latérales dans cette même direction « L ». Dans un mode particulier de réalisation, le bac 12 est en plastique résistant aux acides ou du moins comprenant une couche de protection résistante, cette dernière pouvant être une couche protectrice de téflon® (PTFE).

La figure 4 est une vue en perspective du deuxième entonnoir 26 du dispositif de rétention conforme à l'invention. On peut voir le support 40 sur lequel est intégré la goulotte 28. On peut voir l'orifice 30 au bout de l'embout de sortie 32 de la goulotte. Le deuxième entonnoir 26 peut aussi être réalisé en plastique résistant aux acides ou du moins comprend une couche de protection résistante, telle qu'une couche de téflon® (PTFE).

## Revendications

1. Dispositif de rétention (8) du liquide d'une batterie (4) de véhicule automobile (2), comprenant :
- un bac de rétention (12) avec une paroi de fond (14) et des parois latérales (16) aptes à contenir le liquide, ladite paroi de fond comprenant un passage (24) dudit liquide, ledit passage formant un premier entonnoir (18) sous la paroi de fond (14) ;
**caractérisé en ce qu'**il comprend, en outre :
- un deuxième entonnoir (26) configuré pour pouvoir être disposé sous la sortie (25) du premier entonnoir (18) en vue de recevoir le liquide et le guider vers une position latéralement décalée par rapport à la sortie (25) du premier entonnoir.

2. Dispositif de rétention (8) selon la revendication 1, **caractérisé en ce que** le deuxième entonnoir (26) comprend une goulotte (28) destinée à s'étendre transversalement au véhicule (2).

3. Dispositif de rétention (8) selon l'une des revendications 1 et 2, **caractérisé en ce que** le deuxième entonnoir (26) fait partie d'un support (40) d'un ou plusieurs éléments du véhicule.

4. Dispositif de rétention (8) selon l'une des revendications 1 à 3, **caractérisé en ce que** le deuxième entonnoir (26) comprend un embout de sortie (32) généralement cylindrique sur lequel un tuyau flexible (34) peut être monté.

5. Dispositif de rétention (8) selon l'une des revendications 1 à 4, **caractérisé en ce que** le bac de rétention (12) est généralement rectangulaire et s'étend suivant une direction principale, le passage (24) pour le liquide au niveau de la paroi de fond formant une section s'étendant transversalement, préférentiellement perpendiculairement, à la direction principale.

6. Véhicule automobile (2) comprenant :
- une batterie (4) comprenant du liquide, préférentiellement de l'acide ;
- un dispositif de rétention (8) du liquide de la batterie ;
- un support (22) de la batterie, fixé à la structure du véhicule ;
**caractérisé en ce que**
le dispositif de rétention (8) est conforme à l'une des revendications 1 à 5, le bac de rétention (12) dudit dispositif étant disposé sur le support (22) et recevant la batterie (4).

7. Véhicule (2) selon la revendication 6, **caractérisé en ce que** le deuxième entonnoir (26) du dispositif de rétention (8) est disposé de manière à guider le liquide latéralement vers l'extérieur du véhicule.

8. Véhicule (2) selon l'une des revendications 6 et 7, **caractérisé en ce qu'**il comprend deux profilés structurels (10, 10') généralement parallèles s'étendant longitudinalement dans le compartiment moteur (6) à l'avant du véhicule, le support (40) et le deuxième entonnoir (26) du dispositif de rétention (8) étant fixés à un des deux profilés structurels.

9. Véhicule (2) selon la revendication 8, **caractérisé en ce que** le deuxième entonnoir (26) du dispositif de rétention (8) est configuré pour guider le liquide le long d'une face latérale intérieure (38) du profilé structurel (10) sur lequel le deuxième entonnoir (26) et le support (22) sont fixés.

10. Véhicule (2) selon l'une des revendications 6 à 9, **caractérisé en ce qu'**il comprend un tuyau flexible (34) raccordé à la sortie (32) du deuxième entonnoir (26) du dispositif de rétention (8).
